# EUROPEAN PATENT APPLICATION

(11) **EP 3 261 233 A1**
(43) Date of publication of application: **27.12.2017**
(21) Application number: 16175609.3
(22) Date of filing: 22.06.2016
(51) Int. Cl.: H02K 19/08, H02K 19/10, B60K 6/48, B60K 6/445, B60K 6/448, B60K 6/52, B60K 6/547, B60K 6/387, B60K 6/36, F16H 3/00, F16H 3/72

(54) **POWERTRAIN FOR A VEHICLE**

(71) Applicant: AVL List GmbH, 8020 Graz (AT)
(72) Inventor: DAVYDOV, Vitaly, 8020 GRAZ (AT); NISSEN, Peter-Jürgen, 8045 GRAZ (AT); VAN DER HARDT ABERSON, Frederik Ernst Carel, 88131 LINDAU (DE)
(74) Representative: Babeluk, Michael

(57) **Abstract**

The invention relates to a powertrain (2) for a vehicle (1) with at least one first driving axle (4), having a prime mover (12) and a multi-speed transmission (10) kinematically connected to the prime mover (12) via an input shaft (11) and via at least one output shaft (27a, 27b) to the first driving axle (4), the multi-speed transmission (10) comprising:
a first driveshaft (13) and a second driveshaft (14), each of the two concentric driveshafts (13, 14) having at least one driving gearwheels (G1a, G2a, G3a, G4a, G56a, GRa);
at least one driven shaft (15), kinematically connected to said first driving axle (4), with a plurality of gearwheels (GRb, G1b, G2b, G3b, G4b, G56b) on said driven shaft (15), meshing with the driving gearwheels (GRa, G1a, G2a, G3a, G4a, G56a) on said driveshafts (13, 14), said gearwheels (G1a, G2a, G3a, G4a, G56a, G1b, G2b, G3b, G4b, G56b) being engageable to said shafts (13, 14; 15) with clutches (C1, C2, C3) forming a power flow from said driveshafts (13, 14) to the driven shaft (15) with different ratios;
a first electric machine (17) with a first rotor (17a);
a planetary gearset (20) with a first link (21) being connected to the first driveshaft (13) and the input shaft (11), a second link (22) being connected to the second driveshaft (14), and a third link (23) being kinematically connected to the rotor (17a) of said first electric machine (17);
a controllable lock-up clutch (CL); and
at least one second electric machine (117). At least one of said electric machines (17, 117, 217) is embodied as hysteresis synchronous machine, and its rotor (17a, 117a, 217a) comprises means (32, 132) of forced cooling of the magnet core.

## Description

The invention relates to a powertrain for a vehicle with at least one first driving axle, having a prime mover and a multi-speed transmission kinematically connected to the prime mover via an input shaft and via at least one output shaft to the first driving axle , the multi-speed transmission comprising:
a first driveshaft and a second driveshaft, each of the two concentric driveshafts having at least one driving gearwheels;
at least one driven shaft, kinematically connected to said first driving axle, with a plurality of gearwheels on said driven shaft, meshing with the driving gearwheels on said driveshafts, said gearwheels being engageable to said shafts with clutches forming a power flow from said driveshafts to the driven shaft with different ratios;
a first electric machine with a first rotor;
a power split device being configures as a planetary gearset with at least three links, a first of said links being connected to the first driveshaft and the input shaft, a second link being connected to the second driveshaft, and a third link being kinematically connected to the rotor of said electric machine;
and a controllable lock-up clutch to lock said power split device.

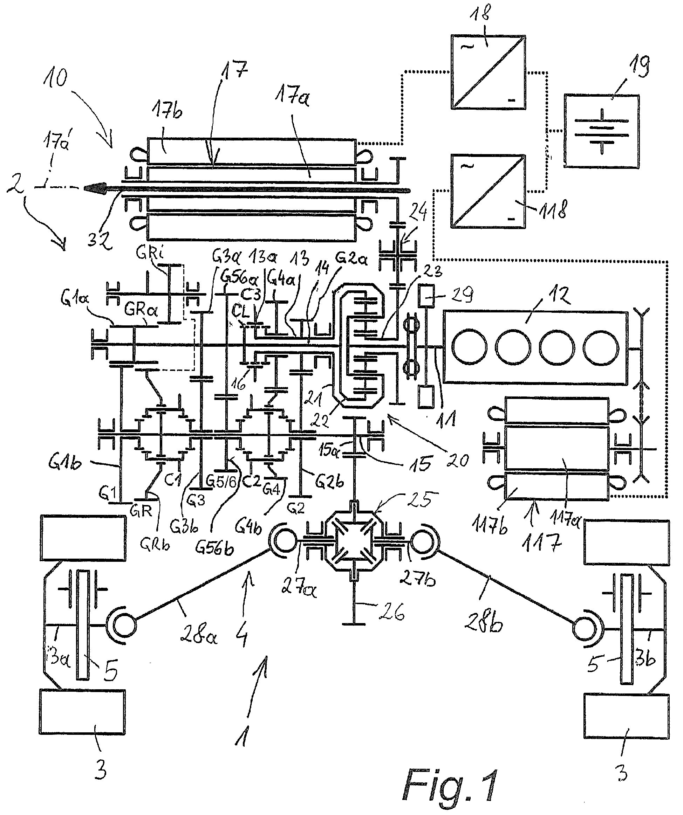

Fig. 1 shows such a multi-speed transmission according to the state of the art, disclosed in the European Patent application no. 14196899.0 (EP 3 031 648 A1) of the applicant, and disclosed in the article "AVL DynoShift - Low Cost Torque-Filled Transmission Concept", 14th International CTI Symposium, Automotive Transmissions, HEV and EV Drives, Berlin, 7-10 December 2015, ISSBN 978-3-9817822-0-2. The multi-speed transmission comprises a power split device, a prime mover, two shiftable sub-transmissions, each providing a plurality of different gear ratios, and a rotating electric machine, connected to the power split device. The two sub-transmissions can be connected alternatively to an output shaft. Similar transmission architectures are described in the European Patent applications No. 15189106.6 and No. 15172154.5 of the applicant.

Trade-offs of such transmission architectures are:
- Torque reduction during gearshifts,
- Energy losses in passive torque fill mode,
- Reduced starting torque on the wheels - higher R/1^{st}-speed gear ratio required,
- Powerful electric battery is required for active torque fill or energy-saving passive torque fill with power recuperation.

The document US 8,784,245 B2 describes a multi-speed transmission, especially for a vehicle, comprising an input shaft and two concentric driveshafts with plurality of gears on them. At least one driven shaft with a plurality of gears on it meshes with the gears on the, wherein the gears are engageable to said shafts with clutches, forming a powerflow from said driveshafts to the driven shafts with different ratios. A controllable lock-up clutch is arranged between two gears on said driveshafts, connecting said driving shafts with each other. A rotating electric machine is connected to a battery via a control system. An output shaft is arranged coaxial to said driveshafts and meshes constantly with the driven shafts via gearing. The output shaft is directly engageable to one of the driveshafts via a clutch. The transmission further comprises a planetary gearset with three links, wherein a first of said links is connected to the first driveshaft and the input shaft, a second link is connected to the second driveshaft, and a third link is kinematically connected to the rotor of said electric machine. The rotor of the electric machine is arranged coaxially to the driveshafts. The main disadvantage of this multi-speed transmission is mechanical complexity.

The U.S. patent No. 8,585,522 discloses a drive train with a combustion engine, an electric machine, and a transmission with first and second partial transmissions. The electric machine is coupled via a planetary transmission to input shafts of the first and second partial transmissions. The combustion engine can be coupled, via a separation clutch, to the input shaft of the second partial transmission and, when the separation clutch is engaged, the engine is also connected, via the planetary transmission, to the input shaft of the first partial transmission. A bridging shift element interacts with the planetary transmission such that, when the bridging shift element is engaged, the electric machine and the input shafts of the first and second partial transmissions are torsionally fixed so that they all rotate together. When the bridging shift element is disengaged, there is no torsionally fixed connection and those component rotate at different rotational speeds. The disadvantage of this drive train is that parallel arrangement of the partial transmissions is characterized with power losses in additional gearing (two gear meshes are involved in the powerflow in series).

It is the object of the present invention to avoid these disadvantages and to provide a compact and low cost multi-speed transmission with reduced power losses.

According to the present invention this is achieved in that the powertrain further comprises at least second electric machine, electrically connected to the first electric machine and kinematically connected to one of the rotating parts of the powertrain, wherein at least one of said electric machines is embodied as hysteresis synchronous machine, and its rotor comprises means of forced cooling of the magnet core.

At partial engine loads the power, generated by one of the electric machines can be converted to the mechanical power by another electric machine and returned back to the powerflow. Continuous power split operation is also possible, enabling eCVT modes (eCVT= electronically controlled continuously variable transmission) At high loads the shaft power fraction, exceeding the capacity of the inverter of either first or second electric machine, can be dissipated in the magnetic rotor in hysteresis braking mode. In this way battery/inverter downsizing and reduced shifting losses are enabled at the same time.

"Kinematically connected" means that the theoretical speeds of those rotating parts are proportional to each other. Possible embodiments of the kinematic connections are: rigid connection, connection by non-controllable coupling/damper, geartrain with fixed ratio, chain drive, belt drive.

"Electrically connected" means that said electric machines can transmit electric power to each other. According to a preferred embodiment the electric machines are controlled by voltage inverters, which are connected to common DC bus.

The "hysteresis synchronous machine" is an electric machine with a smooth rotor core of hard magnetic material, wherein the direction of rotor remanence magnetization can be reversed by the electromagnetic field from the stator. In a preferred embodiment a hysteresis machine is a synchronous electric machine, comprising a stator with windings and a non-salient rotor with a smooth core made of ferromagnetic material with high coercivity (>2000 A/m, preferably 24 000 A/m..160 000 A/m). Such a material is called semi-hard or hard magnetic material. The stator winding is able to create rotating electromagnetic field, linked with rotor core. The hysteresis machine with a control device form a hysteresis drive, wherein the combination of the machine design, control device power capacity and rotor core material coercivity should ensure changeability of rotor remanence magnetization by the electromagnetic field from the stator.

According to a very simple embodiment of the invention said lock-up clutch is arranged between the two driveshafts in a way that power split device is lockable by connecting said driveshafts to each other. Direct locking of the power split device is also possible.

According to a first embodiment of the invention said second electric machine is kinematically connected to the prime mover.

According to a second embodiment of the invention said second electric machine is kinematically connected to the input shaft and/or the first driveshaft of the transmission.

The advantages of the first and second embodiments are:
▪ Maximal carry-over from conventional powertrain design;
▪ Active torque filled shifts with downsized battery;
▪ Engine start/stop function during sailing.

According to a third embodiment of the invention said second electric machine is kinematically connected to the second driveshaft of the transmission. This embodiment enables gearshifts without torque reduction, i.e., 100% torque fill for all shifts is available. Further increased starting torque on the wheels is disposable.

According to a fourth embodiment of the invention said second electric machine is kinematically connected to an output shaft of the transmission and/or to the first driving axle. This embodiment enables:
▪ Gearshifts without torque reduction (100% torque fill for all shifts);
▪ Increased starting torque on the wheels;
▪ Simplified transmission without mechanical reverse speed;
▪ Pure electric driving modes without torque interruption.

According to a fifth embodiment of the invention said second electric machine is kinematically connected to the second driving axle. This embodiment further enables on-demand all-wheel drive.

According to a sixth embodiment of the invention the powertrain further comprises at least one second driving axle with two wheels, and a third electric machine, wherein said second and third electric machines are kinematically connected to the first and second driving wheels of the second driving axle, respectively, and all three electric machines are electrically connected to each other. This embodiment further enables:
▪ Torque vectoring on second (preferably rear) axle;
▪ Brake-by-wire functions instead of drum/disc friction brake, with sufficient performance also for emergency braking.

Preferably the powertrain further comprises at least one electric energy storage device, electrically connectable to said electric machines. With this embodiment hybrid functions are enabled, i.e., engine start/stop, regenerative braking, boosting, pure electric drive. The electric energy storage device may be an electrochemical battery or a supercapacitor battery, for example. The storage device is not mandatory for the basic transmission functionality like vehicle drive-away and torque-filled gearshifts.

Summing up, the advantages of the invention are:
▪ Reduction of shifting losses - all embodiments;
▪ Gearshifts without torque reduction (100% torque fill for all shifts) - third, fourth, fifth and sixth embodiments;
▪ Increased starting torque on the wheels - third, fourth fifth and sixth embodiments;
▪ Maximal carry-over from conventional powertrain design - first embodiment;
▪ Active torque filled shifts with downsized battery - all embodiments;
▪ Engine start/stop function during sailing without additional controllable or one way clutches/brakes - first and second embodiments;
▪ Low cost 4WD powertrain with dual function of the electric drive (torque filled shifts and 4WD) - fifth embodiment with electric axle;
▪ Advanced low cost 4WD powertrain with multiple functions of the electric drive (torque filled shifts, 4WD, brake-by-wire, torque vectoring) - sixth embodiment with hysteresis wheel hub motors;
▪ Simplified transmission without mechanical reverse speed - fourth, fifth and sixth embodiments;
▪ Pure electric driving modes without torque interruption - fourth, fifth and sixths embodiments.

The invention is explained below in closer detail by reference to the drawings, wherein:
- Fig. 1: is a schematic illustration of a powertrain in accordance with a first embodiment of the invention;
- Fig. 2: shows powerflow directions of this powertrain for an operation point;
- Fig. 3: shows a power split device velocity diagram for powerflow directions shown in Fig. 2;
- Fig. 4: is a schematic illustration of a powertrain in accordance with a second embodiment of the invention;
- Fig. 5: shows powerflow directions of this powertrain for an operation point;
- Fig. 6: shows a power split device velocity diagram for powerflow directions shown in Fig. 5;
- Fig. 7: is a schematic illustration of a powertrain in accordance with a fourth embodiment of the invention;
- Fig. 8: is a schematic illustration of a powertrain in accordance with a fifth embodiment of the invention;
- Fig. 9: is a schematic illustration of a powertrain in accordance with a sixth embodiment of the invention and

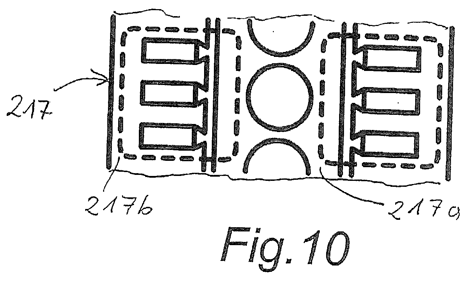

- Fig. 10: shows a detail of this powertrain in a view according to arrow X in Fig. 9.

Functionally identical parts are provided in the embodiments with the same reference numerals.

Each of the embodiments shows a powertrain 2 for a vehicle 1 having a 5-speed transmission 10 with start/stop capability for a vehicle comprising an input shaft 11 attached to a prime mover 12, for example a combustion engine, a first driveshaft 13 and a second driveshaft 14, wherein the driveshafts 13, 14 are arranged concentrically. In the embodiments the second driveshaft 14 is mounted internally through the first driveshaft 13.

The first driveshaft 13 comprises the driving gearwheels G2a, G4a for 2^{nd} and 4^{th} speeds G2, G4, meshing with corresponding driven gearwheels G2b and G4b of the driven shaft 15. The second driveshaft 14 has a plurality of driving gearwheels GRa, G1a, G3a, G56a, for reverse GR, 1^{st}, 3^{rd}, 5^{th}/6^{th} speeds GR, G3, G5/G6, meshing with corresponding driven gearwheels GRb, G1b, G3b, G56b of a driven shaft 15.

The gearwheels G1a, G2a, G3a, G4a, G56a; G1b, G2b, G3b, G4b, G56b for forward speeds are engageable to said shafts 13, 14; 15 with clutches C1, C2, C3 forming a power flow from the driveshafts 13, 14 to the driven shaft 15 with different ratios.

The gearwheel G4b for forward speed G4 is rotationally fixed on the driven shaft 15 in a way that it is located between a pair of loose gearwheels G2b, G56b wherein the corresponding double-sided clutch C2, which engages said loose gearwheels G2b, G56b to the driven shaft 15, is also rotationally fixed on the driven shaft 15, and the dog teeth for alternative engagement of the gearwheels G2b and G56b are arranged on both sides of the corresponding fixed gearwheels G4b.

The gearwheel GRb for reverse speed GR, and forward speeds G1, G3 is also rotationally fixed on the driven shaft 15 in a way that it is located between a pair of loose gearwheels G1b, G3b wherein the corresponding double-sided clutch C1, which engages said loose gearwheels G1b, G3b to the driven shaft 15, is also rotationally fixed on the driven shaft 15, and the dog teeth for alternative engagement of the gearwheels G1b and G3b are arranged on both sides of the corresponding fixed gearwheels GRb.

The transmission 10 comprises a first electric machine 17, e.g., an AC-current machine with a first rotor 17a and a first stator 17b, wherein the windings of the first stator 17b are connected to a multi-phase bi-directional AC power first inverter 18 and a battery 19, e.g., a low-voltage 48V battery, via fixed electrical connection. Preferably the first electric machine 17 is embodied as hysteresis synchronous machine, and its first rotor 17a with a core of semi-hard or hard magnetic material comprises means of forced cooling, e.g. at least one cooling channel 32 for liquid cooling. The power capacity of the first inverter 18 is preferably 15..25% of rated power of the prime mover 12.

The transmission 10 further comprises a second electric machine 117 electrically connected to the first electric machine 17 and kinematically connected to one of the rotating parts of the powertrain 2, with a second first rotor 117a and a second stator 117b, wherein the windings of the first stator 117b are connected to a second inverter 118 and the battery 19. The second electric machine 117 may be embodied as hysteresis synchronous machine, too, wherein its rotor 117a comprises means of forced cooling of the magnet core also made of semi-hard or hard magnetic material.

Further the transmission 10 comprises a planetary gearset 20 with three links 21, 22, 23, wherein the first link 21, e.g. a planet carrier, is connected to the first driveshaft 13 and the input shaft 11, the second link 22, e.g. a ring gear, is connected to the second driveshaft 14, and third link 23, e.g. a sun gear, is kinematically connected to the rotor 17a of the electric machine 17 via a cylindrical geartrain 24, and the axis 17a' of the rotor 17a is placed apart from the axis of the input shaft 11. A speed ratio between the second link 22 and the third link 23 is negative for stopped first link 21.

A controllable lock-up clutch CL is arranged between the driving gears on the driveshafts 13, 14, and connects said driveshafts 13, 14 with each other. Reference numerals 13a and 14a indicate the splines for torque transfer from a shifting sleeve of the lock-up clutch CL. In the embodiments shown in the Figs. the lock-up clutch CL is integrated in clutch C3. In detail the lock-up clutch CL and the clutch C3 engage the pinion 13a with the first driveshaft 13 and share a common shifting sleeve 16.

A gearwheel 36 of a differential 25 constantly meshes with a pinion 15a on the driven shaft 15. Output shafts 27a, 27b of the differential 25 are connected to output shafts 28a, 28b of the transmission 10. The axis of the gearwheel 36 may be arranged parallel or not parallel to the axis of the input shaft 11. The gearing 15a, 26 may be embodied as cylindrical or bevel, respectively.

The 1^{st} speed G1 is provided by engaged first clutch C1 being to first L, i.e. in the Figs. left position, to engage corresponding gear pair G1a, G1b. The 2^{nd} speed G2 is provided by engaged second clutch C2 of corresponding gear pair G2a, G2b being shifted to second position R and engaged lock-up clutch CL, i.e. first position L of third clutch C3. The 3^{rd} speed G3 is provided by engaged first clutch C1 being shifted to the right position R, i.e. in the Figs. right position, of corresponding gear pair G3a, G3b. The 4^{th} speed G4 is provided by disengaged second clutch C2 being shifted to a neutral position, i.e. in the Figs. middle position, and by engaged third clutch C3 being shifted to the second position, i.e. in the Figs. right position, of corresponding gear pair G4a, G4b. The 5^{th} speed G5 is provided by engaged second clutch C2 being shifted to the left position L, i.e. in the Figs. left, of corresponding gear pair G56a, G56b. The 6^{th} speed G6 is provided by engaged second clutch C2 being shifted to the left position L, i.e. in the Figs. left, of corresponding gear pair G56a, G56b and torque reaction from the rotor 17a of the electric machine 17.

The reverse speed GR is provided by meshing of the reverse idler GRi with driving gearwheel GRa and driven gearwheel GRb, and torque reaction from the rotor 17a of the electric machine 17.

In all embodiments the clutches C1, C2, C3 and CL may be designed as simple dog clutches or as dog clutches with synchronizers. A vibration-damping device 29 (e.g. dual-mass flywheel) may be arranged on the input shaft 11.

The clutches C1, C2 are embodied in a way that each of them can alternatively connect two loose gearwheels G1b, G3b; G2b, G56b to the output shaft 15, and wherein said gearwheels G1b, G3b; G2b, G56b are arranged on opposite sides of the gearwheels GRb; G4b which are rotationally fixed to the output shaft 15.

The powertrain 10 of each embodiment comprises a first driving axle 4 with at least one first driving wheel 3. A gearwheel 36 of a first differential 25, e.g. a front differential, constantly meshes with a pinion 15a on the driven shaft 15. First and second output shafts 27a, 27b of the first differential 25 are connected to side shafts 28a, 28b of the transmission 10. The side shafts 28a, 28b are connected to driving shafts 3a, 3b of the first driving wheels 3, e.g. front driving wheels 3. Reference number 5 refers to disk brakes of the driving wheels 3 on the first driving axle 4.

The axis of the gearwheel 36 may be arranged parallel or not parallel to the axis of the input shaft 11. The gearing 15a, 26 may be embodied as cylindrical or bevel, respectively.

According to the first embodiment of the invention shown in Figs. 1 to 3 the second electric machine 117 is kinematically connected to the powertrain 2, - in relation to the powerflow - upstream the power split device 20, for example, to the prime mover 12 or to the input shaft 11 of the transmission 10. In the most efficient operation modes without power recirculation the first electric machine 17 rotates at negative speed and negative torque, supporting active torque filled shifts. The second electric machine 117 provides electric power for active torque filled shifts, reducing electric loads on the battery 19.

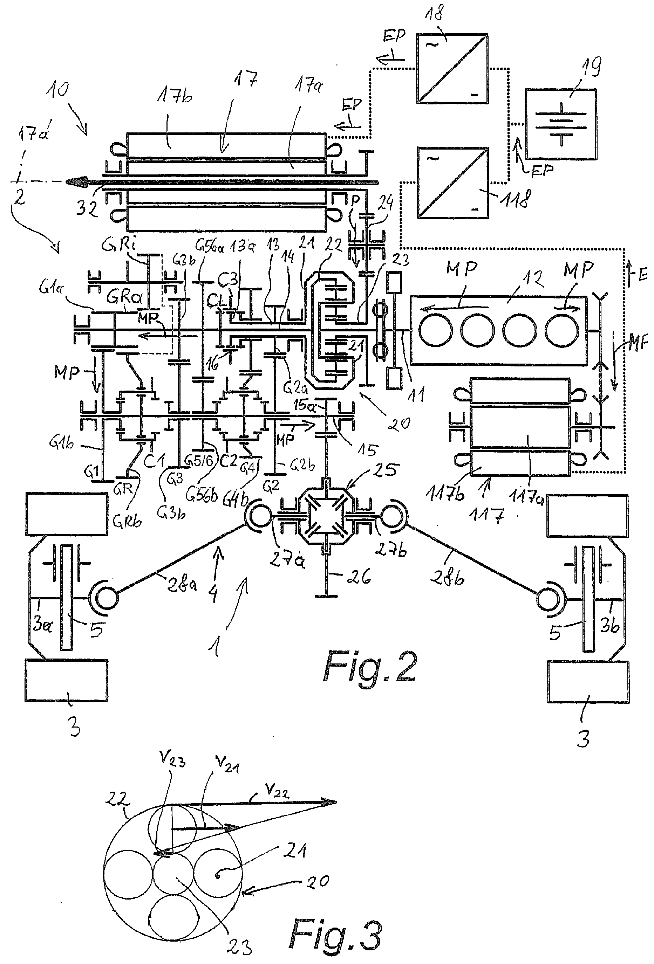

Fig. 2 shows active torque fill example in first embodiment of the invention The powertrain 2 of Fig. 1 has first gear G1 engaged, wherein the mechanical powerflow from the prime mover 12 and the first electric machine 17 to the differential 25 and to the second electric machine 117 being operated in generating mode, is indicated by arrows MP. The second electric machine 117 is electrically connected to the first electric machine 17, wherein the electric powerflow between the electric machines 17, 117 is indicated by arrows EP. For this operation point in Fig. 3a velocity diagram of the power split device 20 is shown with velocities v₂₁, v₂₂ and v₂₃ of the first link 21, the second link 22 and the third link 23, respectively.

In case if no controllable clutch is used between the prime mover 12 and the first driveshaft 13, the second embodiment of the invention is functionally identical to the first embodiment.

Passive torque fill modes, i.e. modes with power recirculation, are also possible in the first and second embodiments. The first electric machine 17 rotates at positive speed and negative torque, absorbing the power. Depending on the load and power capacities of the inverters 18, 118 and the battery 19, this power is partially dissipated in the rotor 17a, and partially converted to the electric power. That electric power is delivered to the second electric machine 117 and is added to the powerflow from the prime mover 12 then.

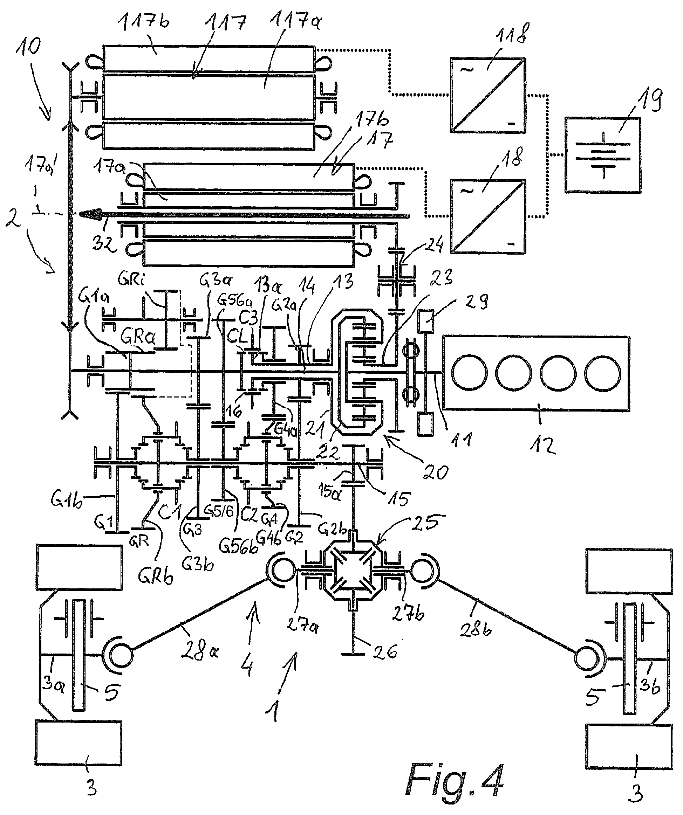

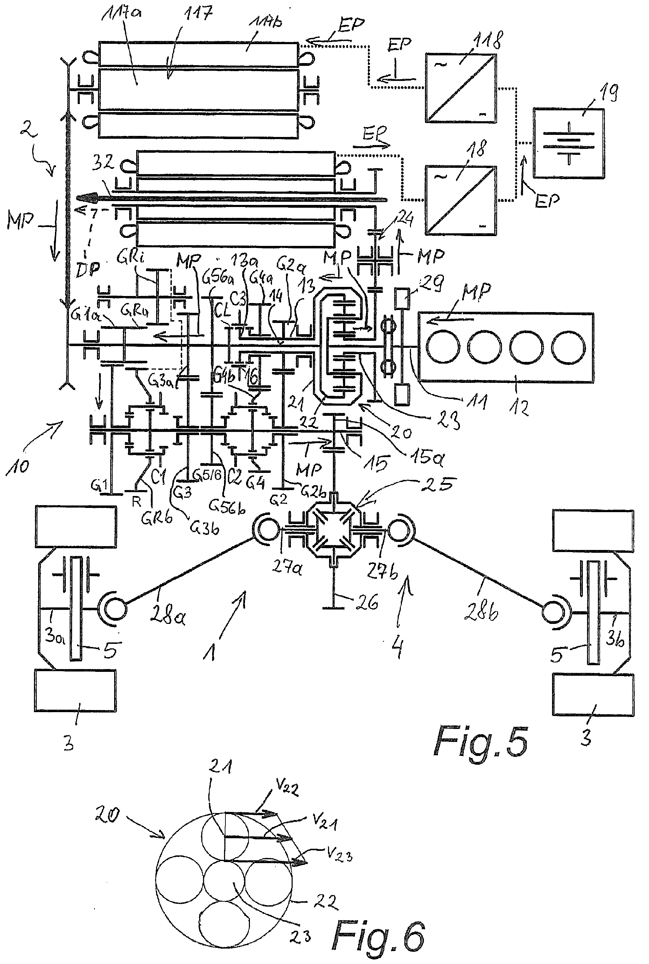

The Fig. 4 to Fig. 9 show further embodiments of the invention with the second electric machine 117 being connected downstream the power split device 20. In Fig. 4 and Fig. 5 there is a third embodiment with the second electric machine 117 being connected to the second driveshaft 14. In the most efficient operation modes without power recirculation the first electric machine 17 rotates at positive speed and negative torque, supporting passive torque filled shifts. The second electric machine 117 consumes generated electric power and converts it to additional torque, added downstream. Active torque fill modes are also possible (with power recirculation).

Fig. 5 shows, for example, the powertrain 2 of Fig. 4 with first gear G1 engaged, wherein the powerflow from the prime mover 12 and from the second electric machine 117 to the differential 25 and to the first electric machine 17 is indicated by arrows MP. The first electric machine 17 is operated in generating mode, the second being electric machine 117 is operated in driving mode. The second electric machine 117 is electrically connected to the first electric machine 17, wherein the electric powerflow between the electric machines 17, 117 is indicated by arrows EP. For this operation point Fig. 6 shows a velocity diagram of the power split device 20 with velocities v₂₁, v₂₂ and v₂₃ of the first link 21, the second link 22 and the third link 23, respectively.

The architecture of the transmission 10 shown in Fig. 1 to 9 is characterized with higher loads of the electric machine 17 during passive torque shifts at positive rotor speeds, comparing to the active torque filled shifts at negative rotor speeds (∼ by 2..3 times). With conventional electric drives and full-size inverters torque fill capacity of ∼130% is achievable in such transmission architecture in passenger car applications.

With inverter size sufficient only for active torque filled shifts, a fraction of the power (up to 50..67%) during passive torque filled shifts should be dissipated in the first rotor 17a of the first electric machine 17. This controllable power dissipation indicated in Fig. 5 with broken arrow DP may be enabled by switching the first electric machine 17 (hysteresis machine) to asynchronous (high slip) mode. The amount of dissipated power DP can be controlled by rotor slip (the difference between electromagnetic field speed and rotor speed). In this way 100% torque fill capacity comparing to conventional powershifted transmission can be achieved, and the electric system power capacity can be reduced comparing to the power split transmissions with conventional electric drives at the same time.

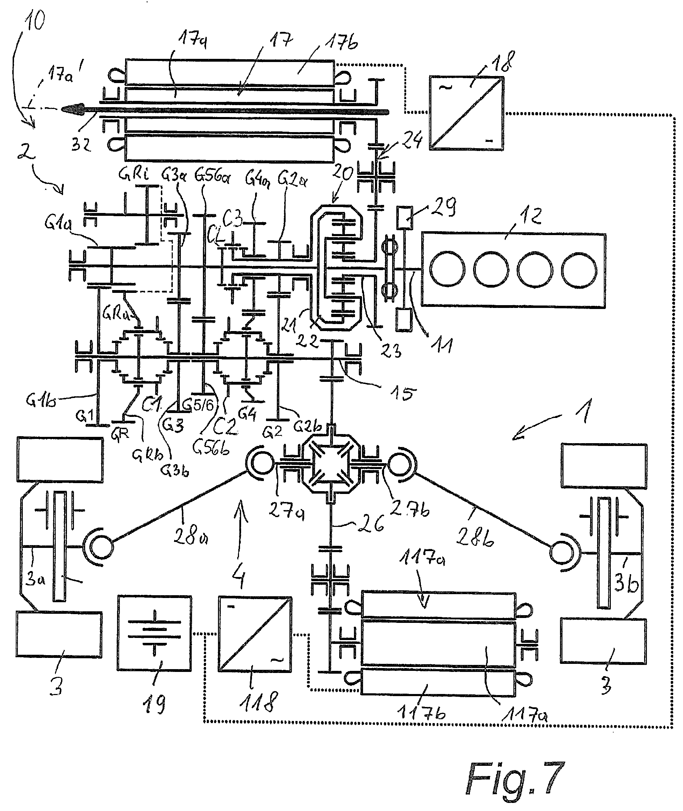

Fig. 7 shows a powertrain 2 according to the fourth embodiment of the invention, wherein the second electric machine 117 is kinematically connected to the first differential 25.

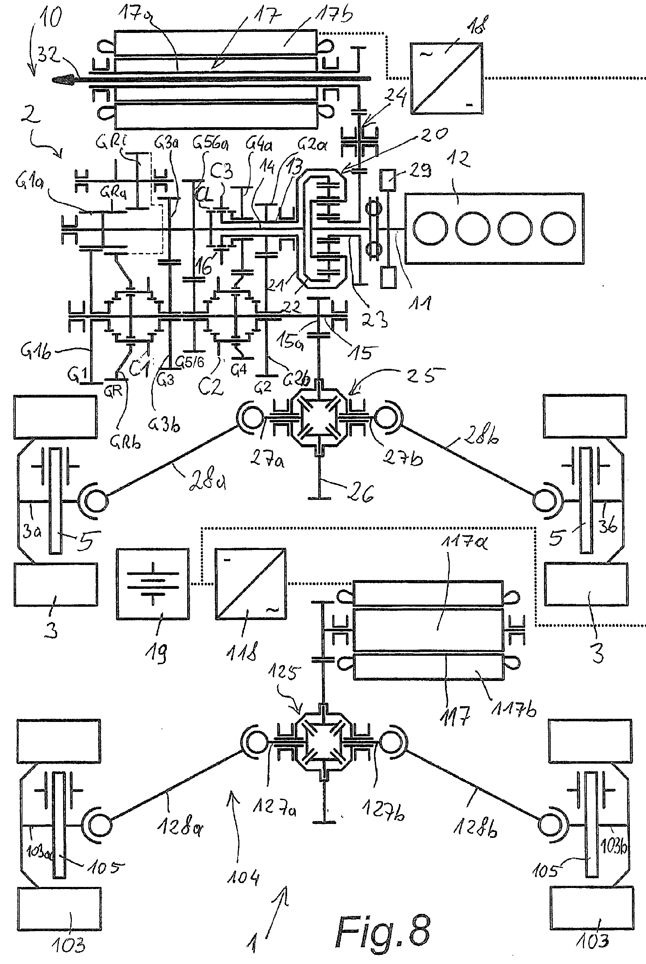

Fig. 8 shows a powertrain 2 according to the fifth embodiment of the invention, wherein the powertrain 10 comprises a second driving axle 104 with at least one second driving wheel 103. The second electric machine 117 is kinematically connected to a second differential 125 of the second driving axle 104, for example a rear differential. The first and second output shafts 127a, 127b of the second differential 125 are connected to side shafts 128a, 128b of the transmission 10. The side shafts 128a, 128b are connected to driving shafts 103a, 103b of the second driving wheels 103, e.g. rear driving wheels 103. Reference number 105 refers to disk brakes of the wheels on the second driving axle 103.

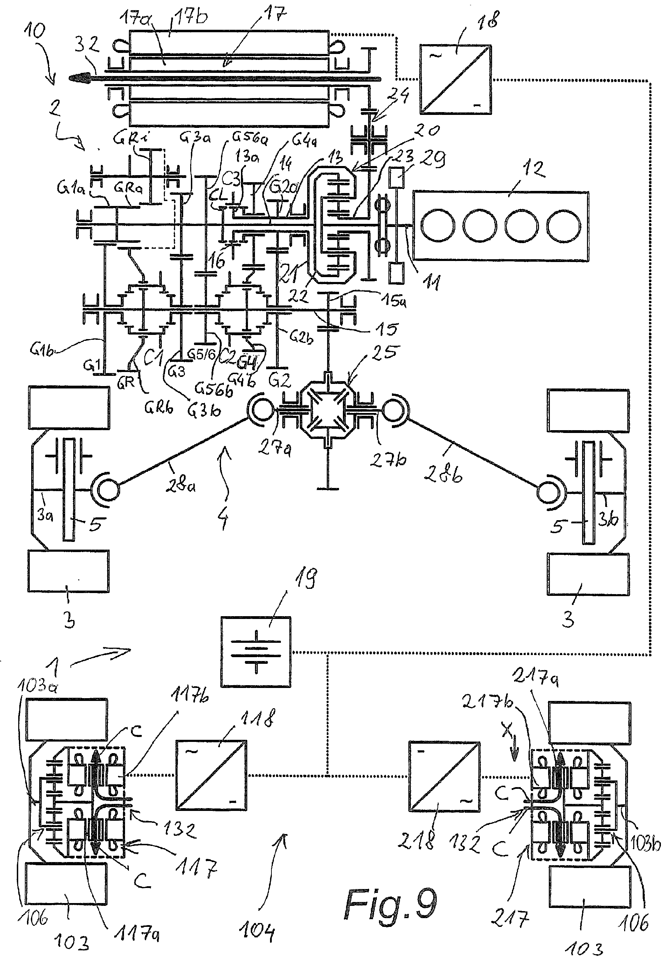

Fig. 9 shows a powertrain 10 according to the sixth embodiment of the invention, wherein the powertrain 10 comprises at least one second driving axle 104 with two second wheels 103, a second electric machine 117 and a third electric machine 217 with second 117a and third rotors 217b, and second 117a and third stators 117b, 217b, wherein said second 117 and third electric machines 217 are kinematically connected to the driving wheels 103 of the second driving axle 104 via planetary speed reducer 106. All three electric machines 17, 117, 217 are electrically connected to each other via first 18, second 118 and third 218 inverters, respectively. The second 117a and third rotors 117a, 217a may comprise means 132 of forced air cooling of the magnet core. Arrows C indicate air cooling flow.

The powerflow during gearshifting in embodiments third to sixth is equivalent. In the third embodiment there are several gear ratios from the second electric machine 177 to the wheels. Therefore, the required torque on the driving wheels can be achieved with reduced torque spread of the second electric machine 117. In the fourth, fifth and sixth embodiments the gear ratio from the second electric machine 177 to the wheels is fixed.

## Claims

1. A powertrain (2) for a vehicle (1) with at least one first driving axle (4), having a prime mover (12) and a multi-speed transmission (10) kinematically connected to the prime mover (12) via an input shaft (11) and via at least one output shaft (27a, 27b) to the first driving axle (4), the multi-speed transmission (10) comprising:
a first driveshaft (13) and a second driveshaft (14), each of the two concentric driveshafts (13, 14) having at least one driving gearwheel (G1a, G2a, G3a, G4a, G56a, GRa);
at least one driven shaft (15), kinematically connected to said first driving axle (4), with a plurality of gearwheels (GRb, G1b, G2b, G3b, G4b, G56b) on said driven shaft (15), meshing with the driving gearwheels (GRa, G1a, G2a, G3a, G4a, G56a) on said driveshafts (13, 14), said gearwheels (G1a, G2a, G3a, G4a, G56a, G1b, G2b, G3b, G4b, G56b) being engageable to said shafts (13, 14; 15) with clutches (C1, C2, C3) forming a power flow from said driveshafts (13, 14) to the driven shaft (15) with different ratios;
a first electric machine (17) with a first rotor (17a);
a power split device being configured as planetary gearset (20) with at least three links (21, 22, 23), a first (21) of said links being connected to the first driveshaft (13) and the input shaft (11), a second link (22) being connected to the second driveshaft (14), and a third link (23) being kinematically connected to the rotor (17a) of said first electric machine (17);
and a controllable lock-up clutch (CL) to lock said power split device; **characterized in that** it further comprises at least second electric machine (117), electrically connected to the first electric machine (17) and kinematically connected to one of the rotating parts of the powertrain (1), wherein at least one of said electric machines (17, 117) is embodied as hysteresis synchronous machine, and its rotor (17a, 117a) comprises means (32, 132) of forced cooling of the magnet core.

2. The powertrain (1) according to the claim 1, **characterised in that** said lock-up clutch (CL) is arranged between the two driveshafts (13, 14) in a way that the power split device is lockable by connecting said driveshafts (13, 14) to each other.

3. The powertrain (1) according to one of the claims 1 to 2, **characterised in that** said second electric machine (117) is kinematically connected to the prime mover (12).

4. The powertrain (1) according to one of the claims 1 to 2, **characterised in that** said second electric machine (117) is kinematically connected to the input shaft (11) and/or the first driveshaft (13) of the transmission (10).

5. The powertrain (1) according to one of the claims 1 to 2, **characterised in that** said second electric machine (117) is kinematically connected to the second driveshaft (14) of the transmission (10).

6. The powertrain (1) according to one of the claims 1 to 2, **characterised in that** said second electric machine (117) is kinematically connected to a driven shaft (15) of the transmission (10) and/or to the first driving axle (4).

7. The powertrain (1) according to one of the claims 1 to 2, **characterised in that** the powertrain (1) further comprises at least one second driving axle (104) with at least one driving wheel (103), wherein said second electric machine (117) is kinematically connected to said second driving axle (104).

8. The powertrain (1) according to one of the claims 1 to 2, **characterised in that** the powertrain (1) further comprises at least one second driving axle (104) with two wheels (103), and a third electric machine (217), wherein said second (117) and third electric machines (217) are kinematically connected to the first and second driving wheels (103) of the second driving axle (104), respectively, and all three electric machines (17, 117, 217) are electrically connected to each other.

9. The powertrain (1) according to one of the claims 1 to 9, **characterised in that** the powertrain (1) further comprises at least one electric energy storage (19) device, electrically connectable to said electric machines (17, 117, 217).
